# EUROPEAN PATENT SPECIFICATION

(11) **EP 4 352 268 B1**
(45) Date of publication and mention of the grant of the patent: **18.03.2026**
(21) Application number: 22732350.8
(22) Date of filing: 25.05.2022
(51) Int. Cl.: C14B 1/56, B32B 38/06, C14B 7/02

(54) **A MACHINE FOR EMBOSSING LEATHER**
MASCHINE ZUM PRÄGEN VON LEDER
MACHINE DE GAUFRAGE DU CUIR

(30) Priority: 08.06.2021 NL 2028413
(43) Date of publication of application: 17.04.2024
(73) Proprietor: Stahl International B.V., 5145 PE Waalwijk (NL)
(72) Inventor: OOMENS, Marc Antonius Petrus Jacobus, 5107 NE Dongen (NL); HOUTEPEN, Cornelis Petrus Wilhelmus, 5107 NE Dongen (NL)
(74) Representative: V.O.
(86) International application number: PCT/NL2022/050292
(87) International publication number: WO 2022/260510

(56) References cited:
- EP-B1- 3 589 489
- WO-A1-2020/209717
- IT-A1- 201800 010 846
- US-A- 3 861 937
- US-A1- 2014 174 306

## Description

### TECHNICAL FIELD AND BACKGROUND

The present disclosure relates to a device for improving the optical appearance of leather substrates, e.g. of leather that is of a quality below full-grain leather while maintaining flexibility and/or haptic properties. In particular the present disclosure concerns a module for embossing leather products comprising a leather support sheet having a surface finish layer of one or more partially cured coating layers received from an upstream processing unit. The invention concerns also a system including the module and one or more rollers used for embossing.

As is known, leather is widely used in several sectors, like for example the automotive, furniture, clothing and shoe sectors. Among the various types of leather, the most expensive part of leather, called puregrain or full-grain leather, is particularly appreciated, owing to its softness and pleasant haptics, in particular .

Embossing of leather is often done, so as to obtain a pattern in the leather, which can be a pattern to mimic the skin characteristics of another animal, such as snake or crocodile, to impart leather with skin characteristics of full-grain leather, or to provide a pattern that is artistic, e.g. not mimicking a particular skin characteristic. In cases where, instead of full-grain leather, lower grade leather such as split leather or corrected grain leather is used, embossing can be used to improve the visual appearance of said leather to a higher grade leather.

Embossing is generally accomplished in a printing operation with roller or plate presses. In the current standard process of making embossed leather, the crust is first treated with a number of finishing coatings, usually comprising one or more base coat layers and a top coat layer, subsequently dried and then embossed, whereby large time intervals between the finishing of the leather and the embossing step are possible.

Demands for high-end premium leather increase, e.g. perfectly smooth leather for apparel, accessories and home interior industries, but there is a limit to the available raw material. Therefore tanners and manufacturers have been looking for ways to improve standard leather and make it suitable for high-end applications. This is what is called in the art leather upgrading, which involves hiding and/or removing grain defects in lower quality standard leather. The results can be indistinguishable from unimproved premium leather. Upgrading technology solutions have been developed which can turn flawed, average leather into excellent leather. Applying upgrading products to the leather substrate can mask many types of grain defects. This increases the quality of the leather and the usable surface area. The result is a higher yield of smooth, fashionable leather with a natural feel and classic elegance. Benefits of upgrading of leather include: higher quality leather with a distinctive look and feel; high consumer satisfaction; most efficient use of raw hides with a higher cutting yield.

Upgrading is often done to hide damages, such as cuts and holes, in the hide or leather or crust. This generally involves applying a coat on the surface of the hide or leather or crust, followed by drying, which is accompanied by shrinking of the volume of the coat into the damaged areas, and then followed by buffing to obtain a smooth surface whereby the original damages are ideally not visible anymore. The upgrading step is usually performed prior to treatment with finish coats and embossing.

The standard embossing methods subject the leather and the coating layers thereon to high pressure (250 to 300 bar) and high temperature (100 to 110°C) which considerably reduces the thickness (by values in the order of 0.1 to 0.2 mm) of the leather and compacts its structure. Disadvantageously, said embossing step deteriorates the leather's characteristics of softness, its characteristic haptics, and/or increases its rigidity.

Conventional upgrading and embossing has some disadvantages.

A first disadvantage is undesirable stiffening of the leather product. Moreover this stiffening is not uniformly distributed along one piece of leather as the upgraded parts on the previously visible damaged areas contain more of the upgrading coats and are thus more rigid than undamaged leather parts.

A second disadvantage is that the upgrading layer or layers contribute to increasing the overall thickness, thus affecting the flexibility and softness and/or haptics of the final leather product.

A third disadvantage is that the upgraded parts on the previously visible damages can remain visible in the final leather product unless a thicker finish coat is applied, which diminishes its natural haptics. In addition, an uneven penetration of coats into the leather product can result in uneven grain break of the leather, which gives an undesirable appearance.

A fourth disadvantage is that several process steps are needed in order to obtain the final leather product, whereby there may be several interruptions between the successive production steps. This limits the speed of production and increases production costs.

EP 3097230 (WO2015/110953) describes an alternate system and method for upgrading hides that employs a release paper, which contains the reverse embossing pattern and which is firstly coated with a lacquer to protect the release paper and to ease the later release thereof. The thus coated release paper is pressed against a partly dried coat of a leather, and after a drying step to cure the coat, the release paper, including the lacquer coat, is removed to obtain the final product. A disadvantage associated to using release paper includes a limitation on the embossing depth because the height of the reverse pattern of a release paper is small. Another or further disadvantage of using release paper is a limited availability of embossing patterns, whereas in general a larger variety is available from embossing plates or embossing cylinders, such as embossing rotopress rollers. Yet another or further disadvantage is that it is cumbersome to change the pattern to be embossed, because this entails the exchange of the release paper rolls. Still other or further disadvantages include that the release paper can easily break, which would result in production interruptions. Moreover, a disadvantage is that the lacquer coat is to be removed from the release paper, e.g. for its re-use, which is an additional processing step and which consumes glue or tape.

ITUA20161537A1 describes a method in which a pattern is made into a coating on leather using a cylinder. The method concerns applying thermo-expanding polymer on leather which is subsequently fully dried, after which a top coat is applied and dried, and generating an embossing pattern using a thermoforming cylinder to generate pattern involving expansion of the thermo-expanding polymers. Obviously, the need for a thermo-expanding polymer and intermediate drying of coating layers impose a severe limitation.

WO 2020/209717 discloses a method for upgrading and embossing of a supporting element, such as a leather substrate, that involves a sequence of process steps, which mitigates one or more of the above problems. WO 2020/209717 discloses a system suited to perform the disclosed upgrading and embossing method. The system is disclosed to comprise a plurality of processing means, each for performing an individual step of sequence of process steps. Said system comprises: first application means to apply at least one base layer of an aqueous coating to a surface of a leather support, crust; means for evaporating from the base layer between 20 and 80% of the amount of water and optional solvent initially present; second application means for applying at least one lacquer layer on the thus dried coating; means for evaporating from said lacquer layer between 20 and 80% of the amount of water and/or solvent initially present; third application means for applying at least one layer of foil on the thus dried lacquer coating; means for exerting a pressure on the combination of leather support, coating layers and foil layer so as to emboss the coated surface; and means for removing the foil. After removal of the foil the coating layers can be fully dried (cured) to finalize manufacturing of an embossed leather products. Between individual processing means the product is transported by a conveyor, e.g. a conveyor belt transporting the combination of leather support, coating layers, and the foil, between a means for applying to the foil and means for exerting the pressure.

While the system of individual process units of WO 2020/209717 can perform the sequence of process steps adequately there remains room for improvement. In particular the partially dried, incompletely cured, coating layers as provided onto the leather support were found to be sensitive to damages, even when covered by the foil, during handling and in particular during transport between individual process units. Undesired pressure, wrinkling, or contacts (e.g. manual handling), while the coating is not fully cured, or potential wrinkling, stretching or other deformations to the foil prior to, during and/or after its application, were found to leave visible damage marks on the final embossed leather product.

EP 3 589 489 B1 discloses a module configured for embossing of a leather product.

In particular there remains a need for devices that increase a yield of blemish free upgraded leather products, in particular full hides or sides, e.g. of cattle.

### SUMMARY

The object of the present invention is to provide a system capable of embossing of a leather product comprising a leather support sheet having a surface finish layer of one or more partially cured coating layers. In particular to provide a system that reduces a risk of leaving visible damage marks on the final embossed leather product.

It is a first object of the present invention to provide a module comprising integrated means for applying the steps of applying a protective foil layer onto the leather support sheet having a surface finish layer of one or more partially cured coating layers and embossing said leather support sheet, without a need for a separate means to convey the assembly of leather support and foil between the processing means.

It is another or further object of the present invention to provide a module that can be integrated with an existing leather coating and curing line, such as a leather upgrading line so as to allow in-line processing and embossing of sub-par quality crusts.

It is another or yet further object of the present invention to provide a system that minimizes process time, contact and/or userintervention during processing, in particular between the process steps of applying the protective films/foils and embossing.

It is still another or further object of the present invention to provide a unit that allows minimizing of down-time e.g. due to a change of process conditions, e.g. a change to different embossing pattern, and/or to reduce down time during maintenance.

According to a first aspect the present disclosure concerns a module for embossing of a leather product. As will become clear in more detail herein said module can be understood to mitigate one or more of the disadvantages of known processing systems, to achieve one or more of the above objects, and/or to provide additional or alternative benefits.

The module is configured for inline embossing of a leather product comprising a leather support sheet having a surface finish layer of one or more partially cured coating layers. Said module comprises at least: an application means and a pressure group.

The application means is at least configured to, in use, apply a protective foil onto the partially cured layer by feeding the protective foil and leather product between a first pair of rollers, to form a laminate, whereby the foil and coated leather product are bound by the partially cured coat. Foil and support are laminated by applying a contact pressure between the foil and a back face of the leather support opposite the partially cured coat as the foil and support sheet are guided between the first pair of rollers. The first pair of rollers typically includes an ironing roller and a first counter roller.

The pressure group comprises a second pair of rollers and is configured to, in use, apply an embossing pressure to the laminate between the second pair of rollers, as the laminate is guided between the second pair of rollers. The second pair of rollers typically includes at least an embossing roller having an outer surface with a relief structure and a counter roller, which is herein referred to as second counter roller, so as to emboss a negative of the surface relief structure into the leather product, across the protective foil. According to a variant that does not fall within the scope of the claims, the second pair of rollers can include a plating roller without express relief structure to plate the leather products, thereby exposing a naturally occurring hair cell structure.

The module is configured to, in use, convey the leather product from the application means past the pressure group by means of an elongate sheet of the foil conveyed along a conveying trajectory from a foil supply provided upstream of the laminating means to a foil retriever provided downstream of the pressure group. Thereby the foil acts as a web for guiding the support from the application means and past the pressure group while simultaneously protecting the partially cured coat at least as the leather product is conveyed towards and processed at the pressure group for imparting the relief structure. The foil protects the coat from picking up particles, e.g. dust, during transport. Alternatively, or in addition, the foil protects the coat during processing and reduces potential damages, e.g. scratches or blemishes, due to contact between coat and external objects. Alternatively, or in addition, the foil protects the coat from degrading, e.g. drying or partial curing during processing in the unit, maintaining predictable and constant cure level as the leather is processed, even under varying process conditions such as process temperature and/or conveying speed. Further the foil protects the module, e.g. contact rollers, from picking up contaminations, which may contaminate subsequent products.

Further conveyors for transporting the support from the application means to the pressure group are not needed and are preferably omitted.

It will be appreciated that the device according to the present disclosure, combining at least an application means and a pressure group in a module, forming an integrated unit, may be used to advantage in combination with existing equipment or production lines configured for applying one or more coating layers to leather sheets, e.g. to cover and/or remove grain defects in lower quality standard leather, also referred to as leather upgrading. In particular, and as will be explained in more detail below, the module as disclosed herein can be used to advantage in upgrading of leather support products by providing an integrated means for processing of a number of process steps of the method disclosed in WO 2020/209717. As will be explained in more detail below, the module can be considered to constitute an integrated means offering improved application of a protective foil, embossing, and optionally removal of the protective foil, as compared to processing by separate processing units.

It will be appreciated that the foil can be understood as a consumable that serves a multi-purpose role of conveying the leather products, e.g. pieces of natural or artificial leather of definite length, past the pressure groups for upgrading while protecting both products and rollers from contamination.

It will be appreciated, that the module as disclosed herein can be considered as a modular system configured as a base system or frame configured to cooperate with a plurality of reversibly mountable components, such as, but not limited to ironing rollers, counter pressure rollers, and embossing rollers; drivers; and/or controllers, which may be exchanged as desired, e.g. in dependence of a desired change in a processing condition or to enable the module to impart a particular different desired relief structure. According to another further aspect the present disclosure relates to a modular system or kit comprising a base system or frame and one or more reversibly mountable components. Said system configured to, in use when assembled, emboss a leather product.

### BRIEF DESCRIPTION OF DRAWINGS

These and other features, aspects, and advantages of the apparatus, systems and methods of the present disclosure will become better understood from the following description, appended claims, and accompanying drawing wherein:
FIG 1A depicts an example of the module, not falling within the scope of the claims;
FIG 1B depicts another or further example, not falling within the scope of the claims, of the module processing a leather product;
FIG 1C depicts the leather product at various stages of processing
FIG 2A depicts an embodiment of the module;
FIG 2B depicts a cross section detail view of an embodiment;
FIG 3A and 3B depict perspective views of embodiments;
FIG 4A schematically depicts an embodiment of the module; and
FIG 4B schematically depicts a leather processing line.

### DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

As used herein the term 'embossing' can be construed as concerning imprinting of a relief structure into substrate surface. In the context of the present disclosure a desired relief structure is provided by imprinting a negative of a 3D surface relief structure provided along the surface of a roller, an embossing roller, into a leather product. The relief is imprinted, applied to the laminate, across the protective foil, causing a negative of the structure to be formed in the coat. It is believed imprinting is at least in part a result of displacing portions of the partially cured coat material to conform to the relief structure on the embossing roller. Depending on coating processing conditions, e.g. coat thickness, relief structure geometry, and/or applied pressure, the relief may in part be imparted into in the underlying leather substrate. The embossing according to the invention is distinct from transfer methods, wherein a pre-patterned coat layer is transferred to a substrate, such as disclosed in EP 3097230 (WO2015/110953). Also the method is distinct from the method disclosed in ITUA20161537A1 wherein generation of the relief structure relies on expansion of thermo-expanding polymers.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

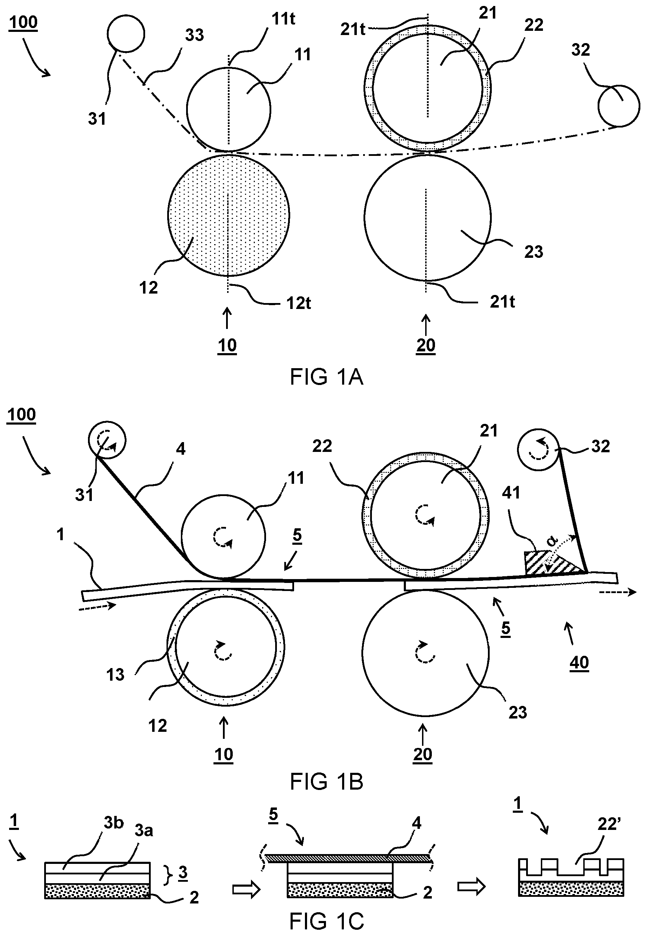

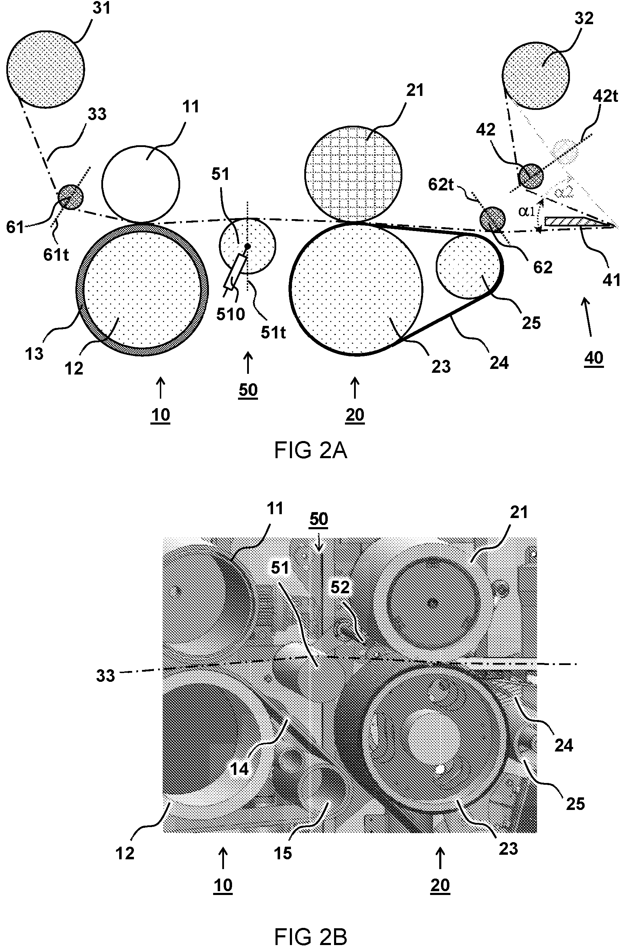

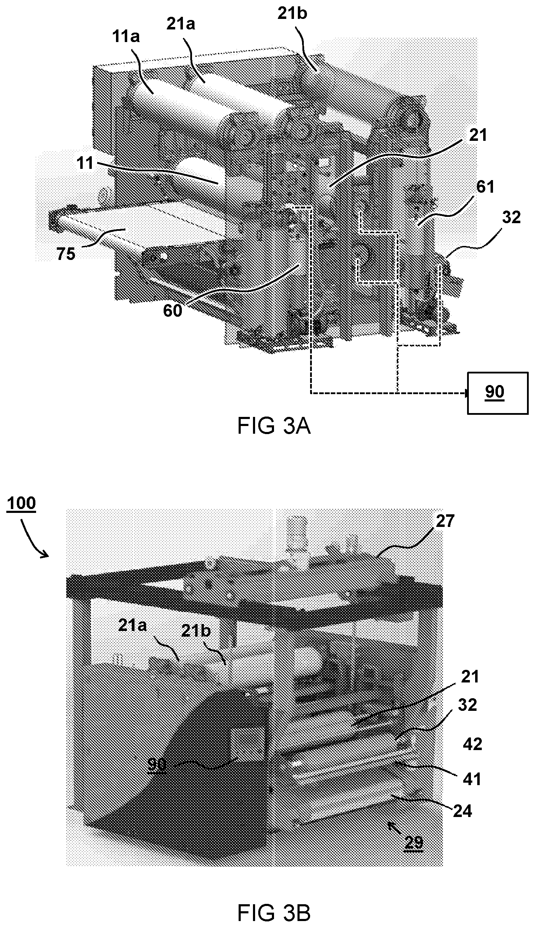

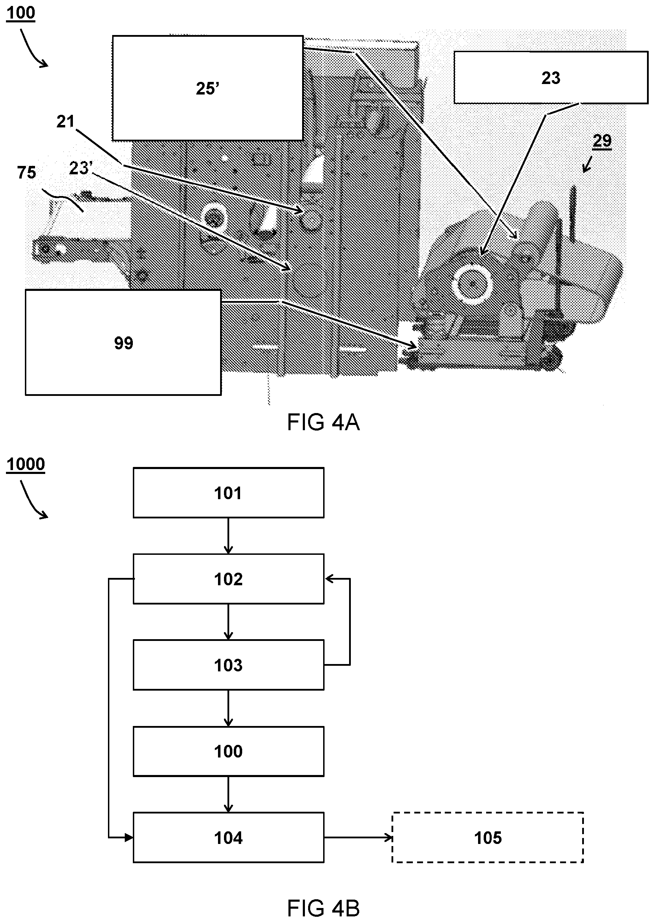

The module will now be described with reference to the figures. FIG 1A depicts a schematic side-view of an example of the module 100, not falling within the scope of the claims. FIG 1B depicts another or further example, not falling within the scope of the claims, of the module during processing a leather product. FIG 1C depicts the leather product at various stages of processing. FIGs 2A and 2B depict a module according to the invention. FIG 3A and 3B depict perspective views of embodiments of the module including one or more of the other or alternative aspects. FIG 4A schematically depicts an embodiment of the module during a maintenance. FIG 4B schematically depicts a module incorporated in a leather processing line.

As shown in FIGs 1A and 1B, the module 100 comprises an application means 10. The application means comprises a first pair of rollers 11,12 disposed across a gap. The first pair includes an ironing roller 11 and a first counter roller 12 positioned across the ironing roller. The module further comprises a pressure group 20. The pressure group comprises a second pair of rollers 21,23 disposed across a second gap. The second pair comprises an embossing roller 21 and a second counter roller 23 positioned across the embossing roller. The embossing roller 21 has an outer surface with a relief structure 22. The relief structure forms a negative of a relief structure that is to be imposed on the leather product 1.

The module further includes a foil supply roller 31 provided upstream of the laminating means and a foil retriever roller 32 provided downstream the pressure group. At least one of the ironing roller 11 and the first counter roller 12 is displaceable along respective displacement trajectories 11t, 12t, so as to adjust a gap distance between the rollers and/or control a contact pressure applied between the rollers.

In a preferred embodiment, the foil retriever, is embodied as a e.g. collector roller or winding roller. The winding roller can advantageously be configured with a torque sensor to regulate foil tension at the winding roller.

As shown in FIG 1B the leather product 1 is guided through the module 100 passing the application means 10 and pressure group 20 as it is processed. Preferably, the module 100 comprises a delaminating means 40 for separating, delaminating, the foil from the embossed leather product 1.

FIG 1C (left) depicts a cross section side view of a leather product 1 before entering the module 100. The leather product 1 comprises a leather support sheet 2 with a surface finish of a partially cured layer 3. FIG 1C (center) depicts a cross section side view of a leather product 1 after a foil 4 has been applied to the partially cured layer 3 at the application means 10, forming a laminate 5. The protective foil 4 acts as a web guiding the leather product 1 towards the pressure group 20. FIG 1C (right) depicts a cross section side view of the leather product 1 including a negative 22' of relief structure 22 provided along embossing roller 21.

As shown, the leather product 1 has a surface finish layer of one or more partially cured coating layers. The surface finish, also referred to as an upgrading layer, typically includes at least one layer of an aqueous base coating 3a and/or at least one layer of a lacquer 3b. These layers 3a,3b are applied in one or more upstream processing units, typically in line with the module, feeding the module with a supply of leather products 1 having a surface finish layer of one or more partially cured coating layers. The surface finish is generally provided along the greater portion of a top face of a leather support sheet including areas to be treated. Typically the surface finish is provided essentially along the entire top face of the leather product 1 to be treated.

Before feeding the leather product 1 to the unit solvent comprised in coating layers forming the surface finish is typically partly evaporated, leaving a tacky partly cured coating, typically comprising between 20% to 80% of the amount of solvent initially present. For details as to the composition of the coating, details as to its applicator and treatment prior to being fed to the module according to the invention for processing reference is made to WO 2020/209717. In particular to the sections on pages 7 to 10 detailing the composition, application and treatment of the upgrading layer, the base coat and lacquer layer. In short, coating the leather support sheet 2, also referred to as supporting element, comprises:
- applying at least one layer of an aqueous base coating to the surface of a supporting element;
- treating said at least one layer so as to evaporate from said at least one layer between 20% and 80% of the amount of water and optional solvent initially present;
- applying on the thus dried layer at least one layer of a lacquer;
- treating said at least one layer of a lacquer so as to evaporate from said lacquer layer between 20% and 80% of the amount of water and/or solvent initially present.

It is important that the foil is applied to the surface finish in a smooth and consistent fashion. This minimizes defects, e.g. due to wrinkling of the foil, which after embossing will likely result in a visual defect. To this end the application means 10 is typically configured, e.g. as shown in FIG 1B, such that the ironing roller 11, having a solid smooth surface finish, contacts the foil, whereas the first counter roller 12 contacts a back face of the leather support sheet opposite the partially cured layer 3. To mitigate defects, e.g. point defects due to thickness variation in the leather support sheet 2 the first counter roller 12 is preferably provided with a soft or elastic surface having a thickness and stiffness configured to accommodate potential thickness variations of the leather support sheet.

Similarly, the second counter roller 23 is preferably provided with a soft or elastic surface. In a preferred embodiment, the first counter roller 12 is provided with an elastomeric surface finish 13, e.g. an elastomer or rubber coating having a thickness in a range of 3 to 20 mm, typically 5 to 15 mm. According to the invention the second counter roller 23 is provided with a felt layer 24 as shown in figures 2A and 2B.

As shown in FIGs 1A and 1B the module comprises a foil supply 31 and the foil retriever 32 forming a conveying trajectory 33 along which an elongate sheet of a protective foil see e.g. FIG 1B may be guided. The conveying trajectory 33 passes the application means 10 and the pressure group 20. The protective foil 4 serves as a web guiding the leather product 1 from the application means 10 past the pressure group 20.

The application means 10 comprises a first pair of rollers 11,12 configured to, in use, apply the protective foil 4 onto the partially cured layer 3 to form a laminate 5. The pressure group 20 is configured to, in use, apply an embossing pressure to the laminate between a second pair of rollers. The second pair of rollers includes an embossing roller 21 having an outer surface with a relief structure 22 and a second counter roller 23, so as to emboss a negative 22' of the surface relief structure into the leather product, across the protective foil.

The foil and the leather product 1 associated thereto may be conveyed through the module at a uniform speed by driving one or more of the rollers 31,32,10,11,21,23. One or more of the rollers may be a passive roller. Typically the foil supply 31 is a passive or braked roller, whereas at least one of the rollers comprised in the pressure group 20, is driven to uniformly guide the foil through the module. To reduce a tensile force on the foil one or more of the rollers comprised in the application means 10, typically the first counter roller 12, is also driven.

In a preferred embodiment, the foil supply is an unwinding roller that is configured with an adjustable brake. The adjustable brake being configured to control, preferably by a controller (e.g controller 90), to adjust a brake force in dependence of an amount of foil remaining on the supply roller. Control can be indirect, e.g. in dependence of a measured length of foil spent, or direct. For example, by measuring (e.g. optically and/or mechanically) a remaining amount of foil as based on a measured thickness of the supply roll. In a preferred embodiment, the module is provided with a driving controller for controlling a conveying speed of the web by controlling: a driving speed of the retriever; a driving speed of the ironing rolling and/or the first counter pressure roller system; and a driving speed of the embossing roller and/or the second counter pressure roller system. Preferably, the driving controller is configured to synchronize the conveying speed of the web along the trajectory in particular at the portion spanning a separation between the laminating means and the pressure group. The driving controller, e.g. a controller 90 (see FIG 3A), imparts a continuous conveying speed of the foil and any leather product 1 associated thereto throughout the module. Typically said means is arranged to synchronize a driving speed of the driven rollers. Maintaining a continuous conveying speed and/or synchronizing a driving speed of the rollers reduces tension or slack on the foil 32 and/or leather product along its passage along the conveying trajectory 33.

At least one of the ironing roller 11 and the first counter roller 12 and at least one of the embossing roller 21 and the second counter roller 23 is displaceable along respective displacement trajectories 11t,12t and 21t,21t. Arranging at least one of the rollers in each of the first and second pair of rollers allows adjusting a position of the rollers in the pairs relative to each other. Adjusting a position of the rollers allows adjusting a gap distance between the rollers, e.g. in dependence of a thickness of the leather product 1 to be processed.

In a preferred embodiment, the module 100 includes means to, in use, adjust a pressure to be applied to the leather product 1 as the leather product 1 is conveyed between the first and second pairs of rollers. In another or further preferred embodiment, the module 100 includes means to heat the ironing roller 11 and means to heat the embossing roller 21. Preferably, the module comprises one or more temperature control means for individually controlling a working temperature of the ironing roller and/or the embossing roller 21.

Application of pressure, typically in combination with heat, ensures proper bonding of the foil to the leather product 1 and proper imprinting of relief structure into the leather product 1 at the application means 10, respectively at the pressure group 20.

Advantageously the module 100 according to the invention allows processing leather products at comparatively milder conditions than conventional methods, e.g. methods of embossing a leather product comprising a fully cured or dried (hardened) coating layer. Conventional methods typically involve subjecting the leather and coating layers thereon to high pressure (250 to 300 bar) and high temperature (100 to 110°C) which considerably compacts the leather as observed by a reduced thickness (typically by values in the order of 0.1 to 0.2 mm). Advantageously the present unit allows processing at mild conditions, typically not exceeding 150 kg/cm² and/or not exceeding 110°C, preferably not exceeding 80°C or even below 60°C. Minimizing the exposure of leather to high pressures and/or temperature mitigates compacting of the leather and reduces a need for subsequent processing steps, involving a treatment in a special system, such as stretching or tumbling or equivalent treatments to adjust characteristics of the embossed product like softness or its haptics.

Application of milder conditions, is believed to be at least in part related to the presence of the partially cured layer 3, enabling bonding of the foil at the application means 10 and embossing at mild conditions.

Generally, the pressure applied at the application means 10 is below 50 kg/cm², typically below 25 kg/cm², or even lower, e.g. in a range between 5 and 15 kg/cm². Typically the temperature of the rolling cylinder, ironing cylinder, is between 30°C and 100°C, preferably between 50°C and 90°C. Typically the temperature is controlled in a range between 40 and 60°C, or up to 80°C. Application of heat in combination with pressure may improve smoothness of bonding between foil and leather product 1. Also application of heat may pre-heat the laminate for the subsequent embossing step at the pressure group 20. Pre-heating the leather, its coating and foil, may soften the laminate reducing the pressure required to imprint the relief structure.

As mentioned earlier the pressure applied during embossing preferably does not exceed 150 kg/cm² (about 150 bars). Typically the pressure is in a range between 25 and 150 kg/cm², e.g. about 50 or 100 kg/cm². The lower the pressure the better, as heavy pressure results in harder and stiffer leather. Preferably, the embossing step is done under heating, which can be achieved by heating the external surface of the embossing cylinder and/or the second counter roller 23. Typically, the embossing cylinder is heated to a temperature between 50°C and 150°C, preferably between 60 and 140°C and most preferably between 80°C and 120°C.

Accordingly, the module can be understood to be configured to: maintain the ironing roller at working temperature in a range between 30°C and 100°C, to maintain a laminating pressure between the first pair of rollers in a range between 5 and 25 kg/cm², to maintain the embossing roller at a working temperature in a range between 50°C and 150°C, and to maintain an embossing pressure between the second pair of rollers in a range between 50 and 150 kg/cm². It will be understood that the unit can be configured to impart different, e.g. high pressures and/or temperatures, enabling the unit to apply conventional embossing methods.

In line with the above, in a preferred embodiment, at least one of the ironing roller 11 and the first counter roller 12, and at least one of the embossing roller 21 and the second counter roller 23 is a pneumatic pressure roller. Pneumatic pressure rollers were found to be particularly suited to apply pressures in the specified target ranges.

Similarly, in other or further preferred embodiments, at least one of the ironing roller 11 and the first counter roller 12, and at least one of the embossing roller 21 and the second counter roller 23 is heatable. Heat may be provided by any known means such as direct electrical resistive heating of the roller. Preferably, the rollers are heated by pumping a hot liquid through an interior space of the roller. Using a hot liquid, e.g. a heat transfer oil, may be preferred because the liquid may be heated externally, i.e. decoupled from the roller, and/or because the heated liquid may be pumped through a plurality of rollers, such as replacement rollers.

In a particularly preferred embodiment, e.g. as shown in FIGs 2A and 3A, the application means 10 comprises a delaminating means 40 for in line removing, delaminating, the foil from the embossed leather product. The delaminating means 40 is provided along the conveying trajectory at a position between the pressure group 20 and the foil retriever. Inline removal of the foil reduces a potential of damaging the partially cured layer 3 of the embossed leather product 1, e.g. by minimizing manual contact and/or contact during further conveying to or at locations for storage and/or for further processing. Optionally, the foil may be removed manually and/or at a later stage, e.g. off-line. For example embossed leather products including sections of the protective foil adhered thereto may be stored or sold for later processing. However, to mitigate potential surface damages inline removal of foil may be preferred, preferably followed by subsequent processing steps of the leather product 1 such as drying or curing the partially cured layer.

The delaminating means generally comprises an impactor extending along a width of the foil positioned to, in use, contact the elongate sheet of foil from a direction opposite the leather product. Typically the impactor is in the form of a blade 41. The blade being positioned along the conveying trajectory 33 so as to impart an acute peel-off angle α for detaching the embossed leather product. Providing an acute angle along the conveying trajectory 33 was found to effectively dissociate the foil from the leather product 1, which is believed to be a result of the leather having a comparatively higher stiffness or higher bending radius than the foil. Preferably, the peel-off angle α is 0-90 degrees. Typically the peel-off angle α is in a range of 10-60 degrees, e.g. about 20 or 45 degrees.

In a preferred embodiment, e.g. as shown in FIG 2A the delaminating means 40 comprises one or more guiding means, typically rollers 42. The guiding means contact the foil to adjust the conveying trajectory 33 around the impactor. Preferably, the one or more guiding means is positionable, e.g. along a trajectory 42t, to adjust the peel-off angle from a more blunt peel-off angle α2 to a more sharp peel-off angle α1 in dependence of a position of the one or more guiding rollers. In a preferred embodiment, the peel-off angle α can be adjusted over a broad range, e.g. between about 90° and a lower value which is limited by an inscribed angle between opposing faces of the impactor, e.g. blade 41. By using a blade the peel-off angle may be adjusted in dependence of a stiffness of the leather support.

In another or further preferred embodiment, e.g. as shown in FIG 2A, the module comprises one or more adjustment means such as contact plates or adjustable rollers 61, 62. The one or more contact means, typically adjustable rollers 61, 62 contact the foil to adjust the conveying trajectory 33 around the roller. Typically each of the one or more adjustable rollers 61, 62 can be positioned along a trajectory 61t, 62t. Advantageously the conveying trajectory 33 can be directed to a trajectory, e.g. during an idle position, whereby foil conveyed along the conveying trajectory 33 is out of a direct contact with the ironing roller and/or the embossing roller. Said one or more adjustable rollers 61, 62 may advantageously also maintain the web of foil along a conveying trajectory 33 even in absence of one or more of the rollers comprised in the application means 10 and/or pressure group 20. For example, while an ironing roller 11 and/or embossing roller 21 is in maintenance or replaced. As such inclusion of the one or more adjustable rollers may be understood to mitigate thermal load onto the protective foil 4 during an idle condition, and/or reduce a down-time of the module during maintenance.

In yet further or additional embodiments, e.g. as shown in FIG 2A, the module comprises a tensioning means 50 positioned between the application means 10 and the pressure group 20. The tensioning comprises a deflection means, such as a contact plate or roller 51. The deflection means is positionable along a positioning trajectory 51t to impart a deflection, resulting in a tension force, onto the conveyed elongate sheet of foil. Preferably, the deflection means is a roller because, as opposed to a contact plate a roller can impart less friction force. In a preferred embodiment, the tensioning means is a pneumatic pressure roller configured to impart a controllable deflection force. Preferably, the deflection means contacts the foil or laminate from a direction without contacting the partially cured layer 3, e.g. contacting a bottom face of the leather support sheet 2 opposite the partially cured layer 3. In other or further embodiments, a linear force sensor 510 measures an actual force applied onto deflection roller 51. The readout is used, e.g. by controller 90, to reposition the tensioning roller so as to maintain a suitable working pressure on the foil. Alternatively, or in addition, the readout can be used to adjust a driving speed of one or more the roller comprises in the pressure groups.

A pneumatic tension roller, such as the roller 51 depicted in FIG 2B, that is pivotable around an axle 52 was found to be particularly suitable to apply a controllable contact force. Application of a contact force, e.g. in a range of 0.1 to 5 kg/cm², was found to advantageously maintain a minimum tension force along its trajectory between application means 10 and pressure group 20 so as to prevent wrinkling of the foil e.g. due to slack on the foil or laminate.

In a preferred embodiment, the tensioning means 50 comprises a controller and sensor configured to position the tensioning means in dependence of a control parameter, e.g. a response of an optical or contact pressure sensor, indicative of a minimal tension or absence thereof (slack). By controlling the tension slack and/or wrinkling of foil can be mitigated, in particular as the laminate is conveyed between the application means 10 and the pressure group 20.

In other or further preferred embodiments, the tensioning means 50 comprises a foil tensioning roller 51 and a force sensor, e.g. a linear force sensor 510, acting on the tensioning roller that is coupled with active feedback regulating a rotational speed of the ironing/embossing rollers to maintain a specific tension. Active feedback regulating a rotational speed of the ironing/embossing rollers to maintain a specific tension was found to optimize slack and/or tension on the foil, mitigating wrinkling and/or tearing of the foil during passages between the pressure groups.

According to the invention the counter roller 23 of the pressure group 20 is provided with a felt layer 24. FIG 2B depicts a detail cross section view of an embodiment of the module including a felt layer 14,24. The felt layer being arranged around said roller to accommodate thickness variations of the leather support sheet. Felt layers were found to be particularly suitable to accommodate pressure variations to thickness variations of the leather support sheet in combination with accommodating height variations along the relief structure provided on roller 21. By accommodation pressure variations local stiffening of the leather product 1 and/or damage to the partially cured layer 3 can be mitigated. Generally the felt layer has a thickness in a range of 1-4 cm, typically about 1-2 cm. Because a felt layer can gradually change properties over the course of its lifetime, the second counter roller 23 typically includes a tensioning and/or guidance system, such as known in the field, including means such as a tensioning roller 25 and/or guidance plates. It will be understood that the first counter roller 12 of the application means 10 may likewise be provided with a felt layer 14 and/or guidance means 15, e.g. as shown in FIG 2B. In view of maintenance requirements provision of an elastomeric surface finish 13 may be preferable. Visible in the cross-section view is a hollow interior of rollers 11,12,23, for heating said rollers by circulation of a thermal oil.

FIG 3A and 3B depict perspective views of particularly preferred embodiments of the module.

In some preferred embodiments, the module comprises a supply for holding one or more substitute ones of the ironing roller 11a and/or the embossing roller 21a,21b. The rollers and substitutes can be exchanged conveniently, e.g. by an integrated lifting means, crane 27, as shown in FIG 3B. Preferably, the module also includes means for preheating at least one of the substitutes. Typically such means 61 comprises a recirculation means including a pump and heater for circulating heated liquid, e.g. thermo oil. Pre-heating the rollers reduces a down-time, e.g. following an exchange of one or more rollers. Conveniently, the module may be provided with a plurality of pre-heating means 60,61 allowing individual temperature control of the rollers and their substitutes.

In other or further embodiments, e.g. as shown, in FIG 3A, the module comprises an input conveyor 75. The input conveyer being configured to receive a leather support sheet 2 having a surface finish layer of one or more partially cured coating layers and for automated guiding of said leather product 1 to the application means 10. Preferably, the input conveyer is synchronized with the conveying speed of the module. Advantageously, the conveyer can receive a leather product 1 from a preceding processing unit, such as a coat applicator 102, 103, for in-line conveying said leather support sheet to the application means for subsequent application of the protective foil.. In some embodiments, the module also includes an output conveyor configured to receive an embossed leather product from the delamination means and for in-line conveying said embossed leather product to a subsequent processing station such as a curing station 104. Provision of an input and/or output conveyer, allows integrating the module in a leather treatment system, such as described in relating to FIG 4B. Advantageously the module can be integrated in existing leather treatment installations. Thus upgrading their ability from application of coating layers to embossing of a leather product 1 comprising a leather support sheet 2 having a surface finish layer of one or more partially cured coating layers 3.

In some embodiments, e.g. as shown in figures FIG 1A to 3B the module comprises:
an application means 10, a laminating means, for bonding the leather product to a web of foil 4 by the partially cured layer 3 to form a laminate;
a pressure group 20 for embossing the leather product; and
a means, foil retriever 32, for conveying the leather product from the application means past the pressure group.

The laminating means comprises: mounts for holding an ironing roller; mounts for holding a first counter pressure roller system positionable across a first gap from the ironing roller; and first control means 90 for, in use, controlling a laminating pressure applied as the web and leather product are conveyed through the first gap.

The pressure group comprises: mounts for an embossing roller having an outer surface with a surface relief structure; mounts for a second counter pressure roller system positionable across a second gap from the embossing roller; and second control means 90 for, in use, controlling an embossing pressure applied to the laminate conveyed through the second gap to emboss a negative of the surface relief structure into the laminate including the web, the surface finish layer, and the leather support sheet.

The transport means comprises a foil supply provided upstream of the laminating means and a foil retriever provided downstream of the pressure group. The foil is provided as an elongate sheet of the foil that is conveyed and spans along a conveying trajectory from the foil supply to the foil retriever 32 along the lamination means and the pressure group. The foil acts as a web that conveys the leather product past the pressure group.

In another or further preferred embodiment, e.g. as shown in FIGs 3B and 4A the second counter roller is provided as part of a modular unit 29. Typically the modular unit includes mounts for a second counter roller 23 and the potential felt layer 24 and/or felt guiding and/or tensioning rollers 25. Advantageously the modular unit can be dismounted, e.g. for exchange and/or service, without detaching a mounted embossing roller, e.g. as shown in FIG 4A and/or without dismounting a web of foil. In some embodiments, e.g. as shown in FIG 4A, the second counter roller is provided as part of a modular unit 29 that can be removed from the system. For example by a lifting means such a transpallet 99. Other element such as the embossing roller and ironing roller, but also the protective foil, can remain in position. Because other elements can remain in position down time due to maintenance can be reduced. Alternatively, or in addition, parts of the modular unit can be removed separately, further easing maintenance. For example, the tensioning roller can be moved to a park position, e.g. on appropriate brackets 25'. In some embodiments it is possible to replace individual parts of the second counter roller 23, such as a gearmotor, without removing the modular unit as a whole, for example via an appropriately positioned hole 23' in the frame of the module.

According to another or further object the present disclosure relates to a system, in particular a leather processing system or leather processing line, including the module 100 as disclosed herein. FIG 4B schematically depicts a module incorporated in a leather processing line 1000.

The system 1000 typically includes at least one or more coating application means 102 for applying a coat layer onto a face of a leather support sheet. The coating application means 102 can receive a leather support sheet 2 from a conventional source, such as an inline crust mill 101. Alternatively, or in addition, leather support sheets may be received from another source such as a commercial supplier.

Typically the system also comprises at least one or more means 103 for partially curing or drying an applied coat layer, such as a drying tunnel or one or more heaters. A desired level of coat curing or drying depends on the application, e.g. on the type, thickness, and/or composition of the applied coat, and/or on a desired end-point, e.g. remaining solvent concentration in the coat after partial curing. It will be understood that processing conditions may be determined and controlled experimentally, e.g. by controlling an amount of applied heat (e.g. by varying temperature and/or exposure time of a coated leather support sheet).

After processing in the module 100, the obtained leather product 1 having a partially cured layer 3 and an embossing relief structure may be collected, sold, and/or stored e.g. for later processing. Typically, the output of the module 100 is further processed subsequently. In some embodiments, e.g. as shown, the system includes a further means 104 for curing or drying the coat layer in which the embossed coat is essentially fully cured. Complete curing of the coat fixes the embossed relief structure and mitigates potential damages that may affect the relief while the coat remains in a partial cured condition. Alternatively or in addition, the embossed coat may be cured by processing at one or more of the means 103 for partially curing or drying an applied coat layer, such as a drying tunnel or one or more heaters.

Transport between individual means of the system may be performed by any method known in the art including manual handling and/or conveying by a conveyor such as a conveyer belt and/or one or more driven rollers. To mitigate a risk of potential damaging uncured and/or partially cured coat layers automatic conveyers are preferred.

In some embodiments, the system may be configured to allow repeatedly processing of a leather support by one or more individual ones of the means comprised in the processing line. In one embodiment, e.g. as shown, the leather support sheet can be repeatedly processed by the means 102 for applying a coat layer and the means 103 for partially curing or drying an applied coat layer. This allows application of a stack of coats, including one or more of base coats, topcoats, and/or color coats, before being conveyed to the module 100 for embossing.

Optionally the system may include one or more further downstream processing means, e.g. a means 105 for applying a color coat.

The module 100 and/or the system or processing line 1000 can be configured to process a broad range of differently dimensioned leather support sheets. The width of leather support sheets 2 that can be processed is in principle only limited by the width length of the rollers comprised in the module. Typically the width of the rollers is less than 4 meters, e.g. between 2 and 3.5 meters. Typically the width is about 3.2 m, or about 3.5 m. Usually commercially relevant full hides, e.g. bovine hides, have an area that is in a range of 3 up to 6 m² up to even larger in some case e.g. 7 m². A width of 3.2 m is sufficient to process a full hide.

For the purpose of clarity and a concise description, features are described herein as part of the same or separate embodiments, however, it will be appreciated that the scope of the invention may include embodiments having combinations of all or some of the features described.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. Where one claim refers to another claim, this may indicate synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context.

## Claims

1. A module (100) configured for embossing of a leather product (1) comprising a leather support sheet (2) having a surface finish layer of one or more partially cured coating layers (3), said module comprising at least:
an application means (10) configured to, in use, apply a protective foil (4) onto the partially cured layer (3) to form a laminate (5) by feeding the protective foil and leather product between a first pair of rollers, said first pair of rollers including an ironing roller (11) and a first counter roller (12), and
a pressure group (20) configured to, in use, apply an embossing pressure to the laminate between a second pair of rollers, said second pair of rollers including an embossing roller (21) having an outer surface with a relief structure (22) and a second counter roller (23), so as to emboss a negative of the surface relief structure into the leather product, across the protective foil;
wherein the module is configured to, in use, convey the leather product from the application means past the pressure group by means of an elongate sheet of the foil conveyed along a conveying trajectory (33) from a foil supply (31) provided upstream of the laminating means to a foil retriever (32) provided downstream of the pressure group, and **characterized in that** the second counter roller (23) is provided with a felt layer (24) arranged around said second counter roller to accommodate thickness variation of the leather support sheet.

2. The module according to claim 1, further comprising a delaminating means (40) provided along the conveying trajectory at a position between the laminating means and the foil retriever, said delaminating means comprising a blade (41) positioned to, in use, contact the elongate sheet of foil from a direction opposite the leather product so as to impart an acute peel-off angle (α) for detaching the embossed leather product.

3. The module according to claim 2, wherein the delaminating means (40) comprises one or more guiding rollers (42), whereby the one or more guiding rollers and/or the blade are positionable relative to each other so as to adjust the peel-off angle.

4. The module according to any of the preceding claims, further comprising a tensioning means (50) positioned between the application means and the pressure group, said tensioning means comprising a deflection roller (51) that is positionable to impart a tension force to the conveyed elongate sheet of foil.

5. The module according to any of the preceding claims comprising one or more temperature control means (60) for individually controlling a working temperature of the ironing roller (11) and/or the embossing roller (21).

6. The module according to any of the preceding claims wherein the first counter roller is coated with an elastomeric surface finish (13) having a thickness and stiffness configured to accommodate thickness variations of the leather support sheet.

7. The module according to any of the preceding claims comprising one or more adjustable rollers (61, 62) for, during an idle condition, directing the conveying trajectory for the elongate sheet of foil to an idle position whereby foil conveyed along the conveying trajectory (33) is out of a direct contact with the ironing roller and/or the embossing roller.

8. The module according to any of the preceding claims, comprising a supply for holding one or more substitute ones of the ironing roller (11a) and/or the embossing roller (21a, 21b) and means (61) for preheating at least one of the substitutes.

9. The module according to any of the preceding claims, wherein the second counter roller is provided as part of a modular unit (29), whereby the unit including second counter roller (23) and the felt layer (24) and optionally felt guiding and/or tensioning rollers (25), is reversibly removable without detaching a mounted embossing roller.

10. The module according to any of the preceding claims, provided with a driving controller (90) configured to synchronize: a driving speed of the foil retriever; a driving speed of the ironing rolling and/or the first counter roller; and a driving speed of the embossing roller and/or the second counter roller.

11. The module according to claim 10, wherein the driving controller (90) is further configured to adjust a conveying speed of the elongate sheet of foil in dependence of an output rate of an upstream system supplying leather support sheets having a surface finish layer of one or more partially cured coating layers.

12. The module according to any of the preceding claims comprising means configured to: maintain the ironing roller at a working temperature in a range between 30°C and 100°C, to maintain a laminating pressure between the first pair of rollers in a range between 5 and 20 kg/cm², to maintain the embossing roller at a working temperature in a range between 50°C and 150°C, and means configured to maintain an embossing pressure between the second pair of rollers in a range between 50 and 150 kg/cm².

13. The module according to any of the preceding claims, comprising an input conveyor (75) configured to receive a leather support sheet (2) having a surface finish layer of one or more partially cured coating layers from a preceding processing unit, such as a coat applicator (102, 103).

14. The module according to any of the preceding claims 2-13, comprising a output conveyor configured to receive an embossed leather product from the delamination means and for in-line conveying said embossed leather product to a subsequent processing station such as a curing station (104).

## Patentansprüche

1. Modul (100), konfiguriert zum Prägen eines Lederprodukts (1), umfassend einen Lederträgerbogen (2) mit einer Oberflächenfinishschicht aus einer oder mehreren teilweise ausgehärteten Beschichtungsschichten (3), das Modul mindestens umfassend:
ein Applikationsmittel (10), konfiguriert, um im Gebrauch eine Schutzfolie (4) auf die teilweise ausgehärtete Schicht (3) aufzutragen, um ein Laminat (5) zu bilden, durch Zuführen der Schutzfolie und des Lederprodukts zwischen ein erstes Walzenpaar, wobei das erste Walzenpaar eine Glättungswalze (11) und eine erste Gegenwalze (12) einschließt, und
eine Druckgruppe (20), konfiguriert, um im Gebrauch einen Prägedruck auf das Laminat zwischen einem zweiten Walzenpaar anzuwenden, wobei das zweite Walzenpaar eine Prägewalze (21), mit einer Außenfläche mit einer Reliefstruktur (22) und eine zweite Gegenwalze (23) einschließt, sodass ein Negativ der Oberflächenreliefstruktur über die Schutzfolie in das Lederprodukt geprägt wird;
wobei das Modul konfiguriert ist, um im Gebrauch das Lederprodukt von dem Applikationsmittel vorbei an der Druckgruppe mittels eines länglichen Folienbogens, transportiert entlang einer Förderbahn (33) von einer Folienzuführung (31), bereitgestellt stromaufwärts des Laminiermittels, zu einem Folienabnehmer (32), bereitgestellt stromabwärts der Druckgruppe, zu transportieren, und **dadurch gekennzeichnet, dass** die zweite Gegenwalze (23) mit einer Filzschicht (24) versehen ist, die um die zweite Gegenwalze angeordneten ist, um Dickenvariationen des Lederträgerbogens anzupassen.

2. Modul nach Anspruch 1, weiter umfassend ein Delaminiermittel (40), bereitgestellt entlang der Förderbahn in einer Position zwischen dem Laminiermittel und dem Folienabnehmer, das Delaminiermittel umfassend ein Messer (41), das positioniert ist, um im Gebrauch den länglichen Folienbogen von einer dem Lederprodukt entgegengesetzten Richtung zu berühren, um so einen spitzen Abziehwinkel (α) zum Lösen des geprägten Lederprodukts zu verleihen.

3. Modul nach Anspruch 2, wobei das Delaminiermittel (40) eine oder mehrere Führungswalzen (42) umfasst, wobei die eine oder mehreren Führungswalzen und/oder das Messer relativ zueinander positionierbar sind, um so den Abziehwinkel einzustellen.

4. Modul nach einem der vorstehenden Ansprüche, weiter umfassend ein Spannmittel (50), positioniert zwischen dem Applikationsmittel und der Druckgruppe, das Spannmittel umfassend eine Umlenkrolle (51), die positionierbar ist, um dem transportierten länglichen Folienbogen eine Spannkraft zu verleihen.

5. Modul nach einem der vorstehenden Ansprüche, umfassend ein oder mehrere Temperaturregelungsmittel (60) zur individuellen Regelung einer Arbeitstemperatur der Glättungswalze (11) und/oder der Prägewalze (21).

6. Modul nach einem der vorstehenden Ansprüche, wobei die erste Gegenwalze mit einem elastomeren Oberflächenfinish (13) beschichtet ist, mit einer Dicke und Steifigkeit, konfiguriert, um Dickenvariationen des Lederträgerbogens anzupassen.

7. Modul nach einem der vorstehenden Ansprüche, umfassend eine oder mehrere einstellbare Walzen (61, 62), um, während eines Leerlaufzustands, die Förderbahn für die längliche Folienbahn in eine Leerlaufposition zu richten, wobei die entlang der Förderbahn (33) geförderte Folie keinen direkten Kontakt mit der Glättungswalze und/oder der Prägewalze hat.

8. Modul nach einem der vorstehenden Ansprüche, umfassend eine Zuführung zum Halten eines oder mehrerer Ersatzwalzen der Glättungswalze (11a) und/oder der Prägewalze (21a, 21b) und Mittel (61) zum Vorwärmen wenigstens eines der Ersatwalzen.

9. Modul nach einem der vorstehenden Ansprüche, wobei die zweite Gegenwalze als Teil einer modularen Einheit (29) bereit gestellt ist, wobei die Einheit eine zweite Gegenwalze (23) und die Filzschicht (24) und optional Filzführungs- und/oder Spannwalzen (25) einschließt, reversibel entfernbar ist, ohne Lösen einer montierten Prägewalze.

10. Modul nach einem der vorstehenden Ansprüche, versehen mit einer Antriebssteuerung (90), konfiguriert, zu synchronisieren: eine Antriebsgeschwindigkeit des Folienaufnehmers; eine Antriebsgeschwindigkeit der Glättungswalze und/oder der ersten Gegenwalze; und eine Antriebsgeschwindigkeit der Prägewalze und/oder der zweiten Gegenwalze.

11. Modul nach Anspruch 10, wobei die Antriebssteuerung (90) weiter konfiguriert ist, um eine Fördergeschwindigkeit der länglichen Folienbahn in Abhängigkeit von einer Abgaberate eines stromaufwärts Systems, das Lederträgerbögen mit einer Oberflächenfinish-Schicht aus einer oder mehreren teilweise ausgehärteten Beschichtungsschichten liefert, anzupassen.

12. Modul nach einem der vorstehenden Ansprüche, umfassend Mittel, konfiguriert um: die Glättungswalze auf einer Arbeitstemperatur in einem Bereich zwischen 30 °C und 100 °C zu halten, um einen Laminierdruck zwischen dem ersten Walzenpaar in einem Bereich zwischen 5 und 20 kg/cm² zu halten, um die Prägewalze auf einer Arbeitstemperatur in einem Bereich zwischen 50 °C und 150 °C zu halten, und Mittel, konfiguriert, um einen Prägedruck zwischen dem zweiten Walzenpaar in einem Bereich zwischen 50 und 150 kg/cm² zu halten.

13. Modul nach einem der vorstehenden Ansprüche, umfassend ein Eingangsband (75), konfiguriert, um einen Lederträgerbogen (2), mit einer Oberflächenfinish-Schicht aus einer oder mehreren teilweise ausgehärteten Beschichtungsschichten von einer vorhergehenden Verarbeitungseinheit, beispielsweise einem Schichtapplikator (102, 103), aufzunehmen.

14. Modul nach einem der vorstehenden Ansprüche 2-13, umfassend ein Ausgabeband, konfiguriert, um ein geprägtes Lederprodukt von dem Delaminiermittel aufzunehmen und um das geprägte Lederprodukt zu einer nachfolgenden Verarbeitungsstation wie einer Härtungsstation (104) in Reihe zu transportieren.

## Revendications

1. Module (100) configuré pour gaufrer un produit en cuir (1) comprenant une feuille de support en cuir (2) ayant une couche de finition de surface d'une ou plusieurs couches de revêtement partiellement durcies (3), ledit module comprenant au moins :
des moyens d'application (10) configurés pour, en cours d'utilisation, appliquer un film de protection (4) sur la couche partiellement durcie (3) pour former un stratifié (5) en faisant passer le film de protection et le produit en cuir entre une première paire de rouleaux, ladite première paire de rouleaux comportant un rouleau de repassage (11) et un premier contre-rouleau (12), et
un groupe de pression (20) configuré pour, en cours d'utilisation, appliquer une pression de gaufrage sur le stratifié entre une deuxième paire de rouleaux, ladite deuxième paire de rouleaux comportant un rouleau de gaufrage (21) ayant une surface extérieure avec une structure en relief (22) et un deuxième contre-rouleau (23), de manière à gaufrer un négatif de la structure en relief de la surface dans le produit en cuir à travers le film de protection ;
dans lequel le module est configuré pour, en cours d'utilisation, transporter le produit en cuir au-delà du groupe de pression depuis les moyens d'application au moyen d'une feuille allongée du film transporté le long d'une trajectoire de transport (33) depuis une réserve de film (31) prévue en amont des moyens d'application jusqu'à un récupérateur de film (32) prévu en aval du groupe de pression, et
**caractérisé en ce que** le deuxième contre-rouleau (23) est pourvu d'une couche de feutre (24) agencée autour dudit deuxième contre-rouleau pour s'adapter à la variation d'épaisseur de la feuille de support en cuir.

2. Module selon la revendication 1, comprenant en outre des moyens de délaminage (40) prévus le long de la trajectoire de transport à une position entre les moyens de stratification et le récupérateur de film, lesdits moyens de délaminage comprenant une lame (41) positionnée pour, en cours d'utilisation, entrer en contact avec la feuille allongée de film depuis une direction opposée au produit en cuir de manière à donner un angle de décollement aigu (a) pour détacher le produit en cuir gaufré.

3. Module selon la revendication 2, dans lequel les moyens de délaminage (40) comprennent un ou plusieurs rouleaux de guidage (42), les un ou plusieurs rouleaux de guidage et/ou la lame pouvant être positionnées les uns par rapport aux autres de manière à régler l'angle de décollement.

4. Module selon l'une des revendications précédentes, comprenant en outre des moyens de tension (50) positionnés entre les moyens d'application et le groupe de pression, lesdits moyens de tension comprenant un rouleau de déviation (51) qui peut être positionné pour donner une force de tension à la feuille allongée du film transporté.

5. Module selon l'une des revendications précédentes, comprenant un ou plusieurs moyens de commande de température (60) pour commander individuellement une température de travail du rouleau de repassage (11) et/ou du rouleau de gaufrage (21).

6. Module selon l'une des revendications précédentes, dans lequel le premier contre-rouleau est revêtu d'une finition de surface élastomère (13) ayant une épaisseur et une rigidité configurées pour s'adapter aux variations d' épaisseur de la feuille de support en cuir.

7. Module selon l'une des revendications précédentes, comprenant un ou plusieurs rouleaux réglables (61, 62) pour, dans un état de repos, diriger la trajectoire de transport pour la feuille allongée de film vers une position de repos, ce qui permet au film transporté le long de la trajectoire de transport (33) de ne pas être en contact direct avec le rouleau de repassage et/ou le rouleau de gaufrage.

8. Module selon l'une des revendications précédentes, comprenant une réserve pour contenir un ou plusieurs substituts du rouleau de repassage (11a) et/ou du rouleau de gaufrage (21a, 21b) et des moyens (61) pour préchauffer au moins l'un des substituts.

9. Module selon l'une des revendications précédentes, dans lequel le deuxième contre-rouleau fait partie d'une unité modulaire (29), ce qui permet à l'unité comportant le deuxième contre-rouleau (23), la couche de feutre (24) et facultativement des rouleaux de guidage et/ou de tension de feutre (25), d'être amovible de manière réversible sans détacher un rouleau de gaufrage monté.

10. Module selon l'une des revendications précédentes, pourvu d'un dispositif de commande d'entraînement (90) configuré pour synchroniser : une vitesse d'entraînement du récupérateur de film ; une vitesse d'entraînement du rouleau de repassage et/ou du premier contre-rouleau ; et une vitesse d'entraînement du rouleau de gaufrage et/ou du deuxième contre-rouleau.

11. Module selon la revendication 10, dans lequel le dispositif de commande d'entraînement (90) est en outre configuré pour régler une vitesse de transport de la feuille allongée de film en fonction d'un taux de sortie d'un système en amont fournissant des feuilles de support en cuir ayant une couche de finition de surface d'une ou plusieurs couches de revêtement partiellement durcies.

12. Module selon l'une des revendications précédentes, comprenant des moyens configurés pour : maintenir le rouleau de repassage à une température de travail dans une plage entre 30 °C et 100 °C, maintenir une pression de stratification entre les rouleaux de la première paire dans une plage entre 5 et 20 kg/cm², maintenir le rouleau de gaufrage à une température de travail dans une plage entre 50 °C et 150 °C, et
des moyens configurés pour maintenir une pression de gaufrage entre les rouleaux de la deuxième paire dans une plage entre 50 et 150 kg/cm².

13. Module selon l'une des revendications précédentes, comprenant un transporteur d'entrée (75) configuré pour recevoir d'une unité de traitement précédente une feuille de support en cuir (2) ayant une couche de finition de surface d'une ou plusieurs couches de revêtement partiellement durcies, telle qu'un applicateur de revêtement (102, 103).

14. Module selon l'une des revendications précédentes 2 à 13, comprenant un transporteur de sortie configuré pour recevoir un produit en cuir gaufré des moyens de délaminage et transporter en ligne ledit produit en cuir gaufré vers un poste de traitement ultérieur tel qu'un poste de durcissement (104).
